Europäisches Patentamt

European Patent Office

Office européen des brevets

(19)

(11) **EP 0 769 519 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int Cl.⁶: **C08K 5/05**, C08K 5/14, C08L 83/04

(21) Anmeldenummer: **96116636.0**

(22) Anmeldetag: **17.10.1996**

(54) **Formtrennmittel enthaltende Siliconkautschuke**

Mould release agent-containing silicone elastomers

Caoutchoucs de silicone contenant de l'agent de démoulage

(84) Benannte Vertragsstaaten:
**DE FR GB IT**

(30) Priorität: **19.10.1995 DE 19539031**

(43) Veröffentlichungstag der Anmeldung:
**23.04.1997 Patentblatt 1997/17**

(73) Patentinhaber: **Wacker-Chemie GmbH**
**81737 München (DE)**

(72) Erfinder:
• **Knies, Wolfgang, Dr.**
**84489 Burghausen (DE)**
• **Guske, Werner**
**84375 Kirchdorf/Inn (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
EP-A- 0 651 020          US-A- 4 771 099

• **DATABASE WPI Week 8027 Derwent**
**Publications Ltd., London, GB; AN 80-47082C**
**XP002021567 & JP 55 066 953 A (SHINETSU)**,
**21.Mai 1980**
• **DATABASE WPI Week 7926 Derwent**
**Publications Ltd., London, GB; AN 79-47660B**
**XP002021273 & JP 55 045 099 B (TORAY**
**SILICONE)**, **16.November 1980**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Verbesserung der Entformbarkeit von Elastomer formkörpern aus Polyorganosiloxankautschuknassen, die in der Wärme zu Elastomeren vulkanisieren, und als internes Formtrennmittel aliphatischen Alkohol enthalten.

In der Silikonkautschukindustrie sind verschiedene Zusatzstoffe zur Verbesserung der Entformung üblich. Diese werden entweder als externe Formtrennmittel auf die Oberfläche der Metallformen gesprüht oder als interne Formtrennmittel den zu verarbeitenden Kautschuken zugesetzt.

Als externe Formtrennmittel für Polysiloxankautschukmassen, die in der Wärme zu Elastomeren vulkanisieren werden häufig wäßrige Lösungen von Seifen eingesetzt. Sie weisen den Nachteil auf, daß sie im Laufe der Zeit einen Belag auf der Formenoberfläche bilden, der zu Oberflächenfehlern des geformten Gegenstands führt. Deshalb müssen die Formen oft gereinigt werden.

Als interne Formtrennmittel für Polysiloxankautschukmassen, die in der Wärme zu Elastomeren vulkanisieren, werden am häufigsten Fettsäuren oder deren Metallsalze verwendet. In den Polysiloxankautschukmassen werden jedoch dabei mechanische Eigenschaften verschlechtert. Insbesondere wird der Druckverformungsrest erhöht, welcher die Rückstellkraft des Vulkanisats nach einer Temperaturbelastung darstellt. Ein niedriger Druckverformungsrest ist besonders wichtig für Dichtungsteile. Ferner bewirken Fettsäuren und besonders deren Metallsalze eine Verfärbung des Vulkanisats. Die Metallsalze der Fettsäuren sind überdies in den Polysiloxankautschukmassen unlöslich und setzen deshalb deren Transparenz herab.

In der EP-A-651 020 ist der Einsatz von Fettsäuren oder deren Metallsalzen in Kombination mit Wasser als interne Formtrennmittel beschrieben. Das Wasser verbessert zwar die Entformbarkeit, führt jedoch zu Bläschen im Kautschuk bei der Vulkanisation. Zudem verlieren derartige Mischungen mit zunehmender Lagerung das Wasser.

JP-A-55 066 953 beschreibt Zusammensetzungen auf Diorganopolysiloxan -Basis, die ei ne Alkohol-Verbindung oder ein Derivat davon enthalten. Die Zusammensetzungen bilden beim Vulkanisieren Silikonkautschuk mit offenen Poren.

Der vorliegenden Erfindung liegt die Aufgabe zugrunde, Polyorganosiloxankautschukmassen bereitzustellen, die in der Wärme zu leicht entformbaren Elastomeren vulkanisieren, wobei die Elastomeren gute mechanische Eigenschaften aufweisen und optisch nicht beeinträchtigt werden sollen.

Gegenstand der Erfindung ist ein Verfahren zur Verbesserung der Entformbarkeit von Elastomerformkörpern, bei dem Polyorganosiloxankautschukmassen, enthaltend

A) 100 Gewichtsteile Organopolysiloxan, aufgebaut aus Einheiten der allgemeinen Formel I

$$R_a SiO_{\frac{4-a}{2}} \qquad\qquad (I),$$

wobei

R  gleiche oder verschiedene einwertige SiC-gebundene, gegebenenfalls mit Halogenatomen oder Cyanogruppen substituierte $C_1$- bis $C_{18}$-Kohlenwasserstoffreste und

a  die Werte 0, 1, 2 oder 3, durchschnittlich 1,95 bis 2,05 bedeuten,

B) 10 bis 200 Gewichtsteile Füllstoff,
C) 0,1 bis 10 Gewichtsteile radikalbildender Vernetzer und
D) 0,05 bis 10 Gewichtsteile aliphatischer Alkohol mit $C_8$- bis $C_{30}$-Alkylresten, bei 100 bis 400°C in Formen vulkanisiert werden.

Das Organopolysiloxan (A) besitzt vorzugsweise eine Viskosität von $0,1 \cdot 10^6$ bis $100 \cdot 10^6$ mPa·s bei 25°C, bevorzugt $1 \cdot 10^6$ bis $20 \cdot 10^6$ mPa·s bei 25°C. Vorzugsweise weist a durchschnittlich 1,98 bis 2,02 auf.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-octadecylrest; Alkenylreste, wie der Vinyl-und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Als Organopolysiloxan (A) wird vorzugsweise Diorganopolysiloxan der allgemeinen Formel II

$$R^1_x R^2_{3-x} SiO(SiR^2_2 O)_m (SiR^2 R^1 O)_n SiR^2_{3-x} R^1_x \qquad (II),$$

verwendet, wobei

R$^1$    gleiche oder verschiedene einwertige, SiC-gebundene, ungesättigte $C_1$- bis $C_6$-Alkylreste,

R$^2$    gleiche oder verschiedene einwertige SiC-gebundene, gegebenenfalls mit Halogenatomen oder Cyanogruppen substituierte gesättigte $C_1$- bis $C_{18}$-Alkylreste oder gegebenenfalls mit Halogenatomen oder Cyanogruppen substituierte $C_1$- bis $C_{18}$-Arylreste,

m    eine ganze Zahl von 100 bis 20 000,

n    0 oder eine ganze Zahl von 1 bis 200 und

x    0 oder 1 bedeuten.

Innerhalb der bzw. entlang der Siloxanketten der allgemeinen Formel II können zusätzlich zu den Diorganosiloxaneinheiten ($SiR^2_2 O$) noch andere Siloxaneinheiten vorliegen. Beispiele für solche anderen, meist lediglich als Verunreinigungen vorliegenden Siloxaneinheiten sind solche der Formeln $R^2 SiO_{3/2}$, $R^2_3 SiO_{1/2}$ und $SiO_{4/2}$, wobei $R^2$ jeweils die oben dafür angegebene Bedeutung hat. Die Menge an solchen anderen Siloxaneinheiten als Diorganosiloxaneinheiten beträgt jedoch vorzugsweise höchstens 10 Molprozent, insbesondere höchstens 1 Molprozent, jeweils bezogen auf das Gewicht von Diorganopolysiloxan (A).

Beispiele für Reste **R$^1$** sind Alkenylreste, wie Vinylrest, Allylrest und Cyclohexenylrest, wobei der Vinylrest bevorzugt ist.

Beispiele für Reste **R$^2$** sind die vorstehend für die Reste **R** aufgeführten, gegebenenfalls mit Halogenatomen oder Cyanogruppen substituierten gesättigten $C_1$- bis $C_{18}$-Alkylreste und die gegebenenfalls mit Halogenatomen oder Cyanogruppen substituierten $C_1$- bis $C_{18}$-Arylreste.

Bevorzugte Beispiele für den Rest **R$^2$** sind $C_{1-8}$-Alkylreste, insbesondere der Methylrest, und der Phenylrest.

Bevorzugt hat **x** den Wert 1 und besonders bevorzugt hat **n** den Wert 10 bis 100, d.h. bevorzugt sind die Vinylreste in den endständigen Einheiten und in der Kette.

Es kann eine Art von Diorganopolysiloxan (A), es kann auch ein Gemisch aus mindestens zwei verschiedene Arten von Diorganopolysiloxan (A) eingesetzt werden.

Beispiele für Füllstoffe (B) sind nichtverstärkende Füllstoffe, also Füllstoffe mit einer spezifischen Oberfläche (BET) von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips und Glaspulver; verstärkende Füllstoffe, also Füllstoffe mit einer spezifischen Oberfläche (BET) von mehr als 50 m²/g, wie Siliciumdioxid mit einer spezifischen Oberfläche (BET) von mindestens 50 m²/g, wie pyrogen hergestellte Kieselsäure, gefällte Kieselsäure, Ruß, wie Furnace- und Acetylenruß und Silicium-Aluminium-Mischoxide großer BET-Oberfläche.

Die genannten Füllstoffe (B) können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff (B), es kann auch ein Gemisch von mindestens zwei Füllstoffen (B) eingesetzt werden.

Bevorzugt wird pyrogen hergestellte Kieselsäure und gefällte Kieselsäure mit einer spezifischen Oberfläche (BET) von mindestens 50 m²/g, insbesondere mindestens 100 m²/g verwendet.

Bevorzugt wird Füllstoff (B) in Mengen von 20 bis 100 Gewichtsteilen, bezogen auf 100 Gewichtsteile Organopolysiloxan (A), eingesetzt.

Als radikalbildende Vernetzer (C) sind Peroxide, insbesondere organische Peroxide, bevorzugt. Beispiele für solche organischen Peroxide sind Acylperoxide, wie Dibenzoylperoxid, Bis-(4-chlorbenzoyl)-peroxid und Bis-(2,4-dichlorbenzoyl)-peroxid; Alkylperoxide und Arylperoxide, wie Dimethylperoxid, Di-tert.-butylperoxid und Dicumylperoxid; Perketale, wie 2,5-Bis-(tert.-butylperoxy)-2,5-dimethylhexan; Perester, wie Diacetylperoxydicarbonat und tert.-Butylperbenzoat.

Vorzugsweise werden radikalbildende Vernetzer (C) in Mengen von 0,1 bis 5 Gewichtsteilen, insbesondere 0,2 bis 2,0 Gewichtsteilen, jeweils bezogen auf 100 Gewichtsteile Organopolysiloxan (A), verwendet.

Als aliphatische Alkohole (D) können gesättigte Alkohole, wie 1-n-Octanol, 1-n-Decanol, Stearylalkohol und 1-n-Dodecanol; ungesättigte Alkohole, wie der Oleylalkohol und verzweigte Alkohole eingesetzt werden. Die aliphatischen Alkohole (D) können auch mit Cyanogruppen substituiert sein. Es können einwertige Alkohole, Dialkohole und mehrwertige Alkohole verwendet werden. Die Hydroxylgruppe kann auch in der Alkylkette angebunden sein.

Vorzugsweise werden einwertige Alkohole, insbesondere n-Alkohole eingesetzt. Vorzugsweise besitzen die Alkohole (D) 10 bis 20 Kohlenstoffatome. Vorzugsweise sind die Alkohole gesättigt.

Insbesondere werden 1-n-Dodecanol, 1-n-Tetradecanol, 1-n-Hexadecanol und Stearylalkohol eingesetzt.

Es kann ein Alkohol, es kann auch ein Gemisch verschiedener Alkohole eingesetzt werden. Vorteilhaft wirkt sich bei Gemischen der tiefere Mischschmelzpunkt aus, da Flüssigkeiten leichter in die Polyorganosiloxankautschukmassen eingearbeitet werden können.

Vorzugsweise werden Alkohole (D) in Mengen von 0,1 bis 5 Gewichtsteilen, insbesondere 0,1 bis 1,0 Gewichtsteilen, jeweils bezogen auf 100 Gewichtsteile Organopolysiloxan (A), verwendet.

Vorzugsweise wird zusätzlich bis zu 30 Gewichtsteile niederviskose Organosiliciumverbindung (E) als Antistrukturmittel in den Polyorganosiloxankautschukmassen eingesetzt. Organosiliciumverbindung (E) besitzt vorzugsweise eine Viskosität von 10 bis 100 mPa·s bei 25°C, bevorzugt 30 bis 60 mPa·s bei 25°C.

Organosiliciumverbindung (E) wird in Mengen von vorzugsweise 0,5 bis 20 Gewichtsteilen, insbesondere 1 bis 15 Gewichtsteilen, jeweils bezogen auf 100 Gewichtsteile Organopolysiloxan (A), eingesetzt.

Bevorzugt wird als Organosiliciumverbindung (E) solche der allgemeinen Formel III

$$R^3OR^4_2SiO(SiR^4_2O)_pR^3 \tag{III},$$

wobei

R$^3$ ein Wasserstoffatom oder einen einwertigen $C_1$- bis $C_4$-Kohlenwasserstoffrest, der gegebenenfalls durch ein Ethersauerstoffatom unterbrochen ist,

R$^4$ die Bedeutung von R und

p 0 oder eine ganze Zahl von 1 bis 50 bedeuten,

eingesetzt.

Beispiele für Reste R$^3$ sind Alkylreste, wie der Methyl-, Ethyl-, n-Propyl-, iso-Propyl-, 1-n-Butyl-, 2-n-Butyl-, iso-Butyl- und tert.-Butylrest. Bevorzugt sind der Methyl- und Ethylrest. Beispiele für Reste R$^3$, die durch ein Ethersauerstoffatom substituiert sind, sind der Methoxyethyl- und Ethoxyethylrest.

Beispiele und bevorzugte Beispiele für Reste R$^4$ sind vorstehend für die Reste R aufgeführt.

Besonders bevorzugt als Organosiliciumverbindung (E) sind α,ω-Dihydroxydimethylpolysiloxane mit einer Viskosität von 10 bis 120 mPa·s, insbesondere 30 bis 60 mPa·s bei 25°C.

Den Polyorganosiloxankautschukmassen können zusätzlich zu den Bestandteilen (A) bis (E) herkömmlicherweise mitverwendete Stoffe eingemischt werden. Beispiele für solche Stoffe sind Farbpigmente, Hitzestabilisatoren, Additive zur Verminderung der Entflammbarkeit und Additive zur Verbesserung der Ölbeständigkeit.

Zur Abmischung der Polyorganosiloxankautschukmassen können die vorstehend angegebenen Komponenten (A) bis (D) in beliebiger Reihenfolge gemischt werden.

In einer bevorzugten Ausführungsform werden die Komponenten Organopolysiloxan (A), Füllstoffe (B) und gegebenenfalls Organosiliciumverbindung (E) zuerst vermischt und einer Wärmebehandlung und Entgasung unterworfen. Das Vermischen kann beispielsweise erfolgen in Innenmischern, wie Sigmaknetern, Knetern mit Stempel, beispielsweise vom Banbury-Typ, kontinuierlichen oder diskontinuierlichen Walzwerken und Einwellen- oder Doppelwellenextrudern. Die Erwärmung erfolgt vorzugsweise bei 100 bis 400°C, insbesondere bei 110 bis 250°C. Die Dauer der Erwärmung beträgt 15 Minuten bis 10 Stunden, vorzugsweise 2 bis 4 Stunden bei 140 bis 180°C. Während des Erwärmens kann der Druck leicht vermindert werden, um flüchtige Verbindungen zu entfernen.

Das Einmischen des aliphatischen Alkohols (D) erfolgt vorzugsweise bei 10 bis 70°C, insbesondere unterhalb 50°C. Bei höheren Temperaturen kann sich die entformungshemmende Wirkung verschlechtern.

Um die Handhabung des aliphatischen Alkohols (D) und dessen Einmischen in die Polyorganosiloxankautschukmassen zu erleichtern, kann dieser zuvor mit Füllstoff (B) angeteigt werden oder in einer Polyorganosiloxankautschukbasismischung in hoher Konzentration eingemischt werden, um einen sogenannten Masterbatch zu erhalten. Der aliphatische Alkohol (D) kann aber auch als Lösung in organischen Lösungsmitteln, als wäßrige Lösung, Emulsion oder Dispersion zugemischt werden.

Vorzugsweise beträgt die Vulkanisationstemperatur 120 bis 210°C. Die Vulkanisationszeit beträgt vorzugsweise 1 Minute bis 3 Stunden, insbesondere 5 Minuten bis 1 Stunde.

Beispiel

In einen Polydimethylsiloxankautschuk Elastosil[R] R 267/50 (von Wacker-Chemie GmbH, München) wurden auf einer Laborwalze jeweils 0,3 Gew.-% der in nachstehender Tabelle aufgeführten Formtrennmittel eingemischt. Die erhaltenen Kautschuke wurden mit jeweils 0,4 Gew.-% 2,5-Bis(tert.-butylperoxi)-2,5-dimethylhexan in Form einer 45 Gew.-%-igen Mischung in Silikonkautschuk versetzt und 15 Minuten bei 165°C vulkanisiert.

Tabelle:

| Eigenschaften von interne Formtrennmittel enthaltendem Elastosil[R] R 267/50 Vulkanisat | | | |
|---|---|---|---|
| Formtrennmittel | Stearinsäure | Stearylalkohol | Magnesiumstearat |
| Shore | 54 | 53 | 51 |
| Reißfestigkeit (kg/cm$^2$) | 76 | 85 | 83 |
| Reißdehnung (%) | 300 | 310 | 300 |
| Rückprallelastizität (%) | 62 | 67 | 57 |
| Druckverformungsrest (%) | 25 | 14 | 24 |
| Entformbarkeit | gut | gut | gut |
| Verfärbung (nach Temperung 4h/200°C) | gelb | unverändert | stark gelb |

Die Entformbarkeit wurde manuell beurteilt, die Gelbfärbung der Vulkanisate optisch gegen ein Vulkanisat ohne Zusätze.

**Patentansprüche**

1. Verfahren zur Verbesserung der Entformbarkeit von Elastomerformkörpern, bei dem Polyorganosiloxankautschukmassen, enthaltend

   A) 100 Gewichtsteile Organopolysiloxan, aufgebaut aus Einheiten der allgemeinen Formel I

   $$R_a SiO_{\frac{4-a}{2}} \qquad (I),$$

   wobei

   R   gleiche oder verschiedene einwertige SiC-gebundene, gegebenenfalls mit Halogenatomen oder Cyano-gruppen substituierte $C_1$- bis $C_{18}$-Kohlenwasserstoffreste und
   a   die Werte 0, 1, 2 oder 3, durchschnittlich 1,95 bis 2,05 bedeuten,

   B) 10 bis 200 Gewichtsteile Füllstoff,
   C) 0,1 bis 10 Gewichtsteile radikalbildender Vernetzer und
   D) 0,05 bis 10 Gewichtsteile aliphatischer Alkohol mit $C_8$-bis $C_{30}$-Alkylresten, bei 100 bis 400°C in Formen vulkanisiert werden.

2. Verfahren nach Anspruch 1, bei dem das Organopolysiloxan (A) eine Viskosität von $0,1 \cdot 10^6$ bis $100 \cdot 10^6$ mPa·s bei 25°C aufweist.

3. Verfahren nach Anspruch 1 oder 2, bei dem als Füllstoff (B) pyrogen hergestellte Kieselsäure und/oder gefällte Kieselsäure mit einer spezifischen Oberfläche (BET) von mindestens 50 m$^2$/g, verwendet wird.

4. Verfahren nach einem der Ansprüche 1 bis 3, bei dem als radikalbildende Vernetzer (C) organische Peroxide eingesetzt werden.

5. Verfahren nach einem der Ansprüche 1 bis 4, bei dem als aliphatische Alkohole (D) einwertige Alkohole mit 10 bis 20 Kohlenstoffatomen eingesetzt werden.

6. Verfahren nach einem der Ansprüche 1 bis 5, bei dem zusätzlich bis zu 30 Gewichtsteile niederviskose Organosiliciumverbindung (E) als Antistrukturmittel eingesetzt werden.

**Claims**

1. Process for improving the mould release properties of shaped elastomer articles, in which polyorganosiloxane rubber compositions comprising

   A) 100 parts by weight of organopolysiloxane built up from units of the general formula I

   $$R_aSiO_{\frac{4-a}{2}} \tag{I}$$

   in which

   R   is identical or different monovalent SiC-bonded $C_1$-to $C_{18}$-hydrocarbon radicals which are optionally substituted by halogen atoms or cyano groups and
   a   has the values 0, 1, 2 or 3, on average 1.95 to 2.05,

   B) 10 to 200 parts by weight of filler,
   C) 0.1 to 10 parts by weight of crosslinking agent which forms free radicals and
   D) 0.05 to 10 parts by weight of aliphatic alcohol with $C_8$- to $C_{30}$-alkyl radicals are vulcanized in moulds at 100 to 400°C.

2. Process according to Claim 1, in which the organopolysiloxane (A) has a viscosity of $0.1 \times 10^6$ to $100 \times 10^6$ mPa. s at 25°C.

3. Process according to Claim 1 or 2, in which pyrogenically prepared silicic acid and/or precipitated silicic acid having a specific surface area (BET) of at least 50 m$^2$/g is used as filler (B).

4. Process according to one of Claims 1 to 3, in which organic peroxides are employed as crosslinking agent (C) which forms free radicals.

5. Process according to one of Claims 1 to 4, in which monohydric alcohols having 10 to 20 carbon atoms are employed as aliphatic alcohol (D).

6. Process according to one of Claims 1 to 5, in which up to 30 parts by weight of a low-viscosity organosilicon compound (E) are additionally employed as an antistructuring agent.

**Revendications**

1. Procédé d'amélioration de la démoulabilité de pièces moulées élastomères, dans lequel des compositions de caoutchouc de polyorganosiloxane contenant

   A) 100 parties en poids d'organopolysiloxane constitué de motifs de formule générale I

   $$R_aSiO_{\frac{4-a}{2}} \tag{I,}$$

   dans laquelle

   R   représente des radicaux hydrocarbonés en $C_1$ à $C_{18}$ monovalents liés à SiC, identiques ou différents, éventuellement substitués par des atomes d'halogène ou des groupes cyano, et
   a   vaut 0, 1, 2 ou 3, en moyenne de 1,95 à 2,05,

B) de 10 à 200 parties en poids de charge,
C) de 0,1 à 10 parties en poids d'agent de réticulation formant des radicaux, et
D) de 0,05 à 10 parties en poids d'alcool aliphatique à radicaux alkyle en $C_8$ à $C_{30}$ sont vulcanisées dans des moules entre 100 et 400°C.

2. Procédé selon la revendication 1, dans lequel l'organopolysiloxane (A) présente une viscosité de $0,1.10^6$ à $100.10^6$ mPa.s à 25°C.

3. Procédé selon la revendication 1 ou 2, dans lequel on utilise, en tant que charge (B), de l'acide silicique préparé par pyrogénation et/ou de l'acide silicique précipité ayant une surface spécifique (BET) d'au moins 50 $m^2$/g.

4. Procédé selon l'une quelconque des revendications 1 à 3, dans lequel on utilise des peroxydes organiques en tant qu'agent de réticulation formant des radicaux (C).

5. Procédé selon l'une quelconque des revendications 1 à 4, dans lequel on utilise des alcools monohydriques ayant de 10 à 20 atomes de carbone en tant qu'alcools aliphatiques (D).

6. Procédé selon l'une quelconque des revendications 1 à 5, dans lequel on utilise en outre jusqu'à 30 parties en poids d'un composé organosilicié (E) à faible viscosité en tant qu'agent anti-structure.